Europäisches Patentamt

European Patent Office

Office européen des brevets

(19)

(11) Publication number: **0 137 501**
A2

# (12) EUROPEAN PATENT APPLICATION

(21) Application number: **84112207.0**

(22) Date of filing: **11.10.84**

(51) Int. Cl.⁴: **G 02 B 6/28**

(30) Priority: **11.10.83 JP 190148/83**

(43) Date of publication of application:
**17.04.85 Bulletin 85/16**

(84) Designated Contracting States:
**DE FR GB IT**

(71) Applicant: **SUMITOMO ELECTRIC INDUSTRIES LIMITED
No. 15, Kitahama 5-chome Higashi-ku
Osaka-shi Osaka-fu(JP)**

(72) Inventor: **Suzuki, Shuzo c/o Yokohama Works
Sumitomo Electric Industries, Ltd No. 1, Taya-cho
Totsuka-ku Yokohama-shi Kanagawa-ken(JP)**

(72) Inventor: **Ogasawara, Ichiro c/o Yokohama Works
Sumitomo Electric Industries, Ltd No. 1, Taya-cho
Totsuka-ku Yokohama-shi Kanagawa-ken(JP)**

(72) Inventor: **Matsuda, Yasuo c/o Yokohama Works
Sumitomo Electric Industries, Ltd No. 1, Taya-cho
Totsuka-ku Yokohama-shi Kanagawa-ken(JP)**

(74) Representative: **Lehn, Werner, Dipl.-Ing. et al,
Hoffmann, Eitle & Partner Patentanwälte Arabellastrasse
4 (Sternhaus)
D-8000 München 81(DE)**

(54) Branch off device for multi core optical fiber and production thereof.

(57) A device (7) for branching off a multi core optical fiber (5)
and connecting each elemental optical fiber thereof with a
corresponding single core optical fiber (6), which device (7)
comprises a plurality of cores (8) surrounded by a cladding
material (9). At one end of the device, each core (8) has
substantially the same diameter as that of the elemental
optical fiber to be connected and spatial configuration of the
cores are substantially the same as that of the elemental
optical fibers. At the other end of the device (7), each core (8)
has substantially the same diameter as that of the single
optical fiber (6) to be connected and the core center distance
is the same as or slightly larger than the cladding diameter of
the single optical fiber. All the cladding materials (9)
surrounding the cores (8) of the device (7) are integrated
together. Thus, the multi core optical fiber (5) is connected
with a plurality of the single core optical fibers (6) with low
insertion loss.

*Fig. 3*

Croydon Printing Company Ltd

# BRANCH OFF DEVICE FOR MULTI CORE OPTICAL FIBER

## AND PRODUCTION THEREOF

The present invention relates to a branch off device for a multi core optical fiber and a process for producing the same. More particularly, it relates to a device for branching off a multi core optical fiber and connecting its elemental optical fibers with a plurality of single core optical fibers.

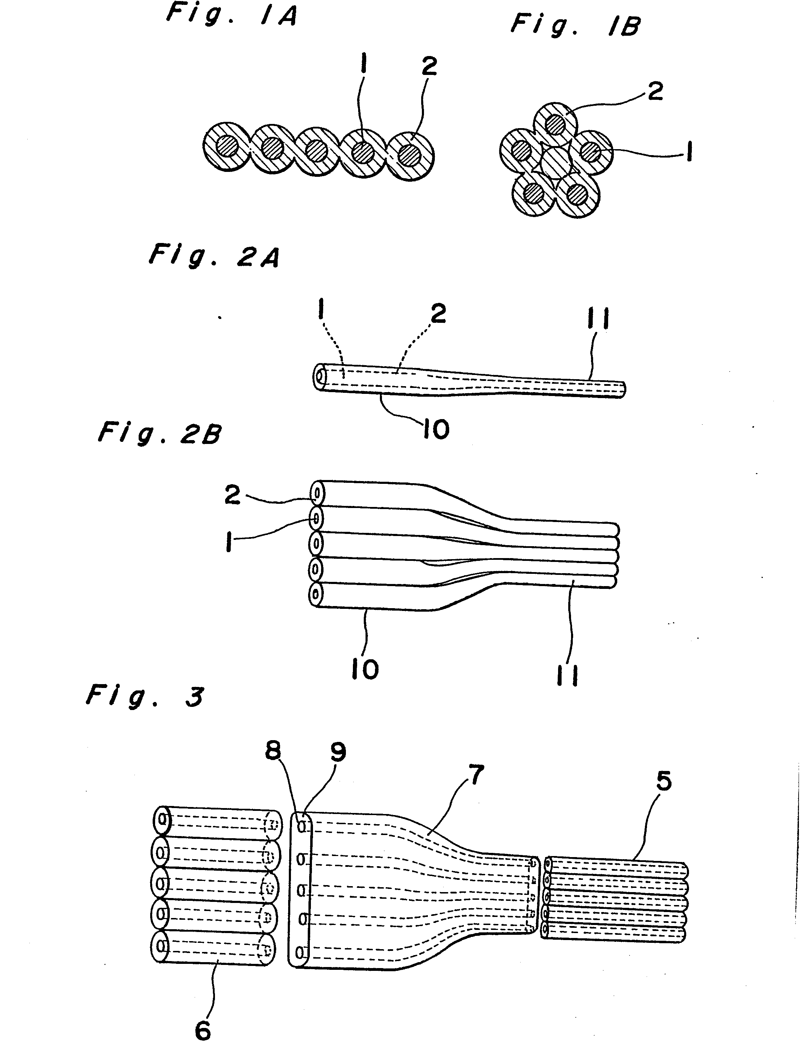

A multi core optical fiber has various structures including, for example, a flat structure as shown in Fig. 1A and a star-like structure as shown in Fig. 1B. In these structures, the multi core optical fibers are produced by fusing adjacent parts of claddings 2 surrounding cores 1 of the optical fibers to integrate them.

When the multi core optical fiber is used in a field of communication, it is essential to branch it off to connect each elemental optical fiber with a single optical fiber and in turn with a terminal device. However, the core size of the elemental optical fiber contained in the multi core optical fiber is smaller than that of the single core optical fiber, and the cladding diameter, namely the core center distance of the former is smaller than that of the latter. Therefore, it is impossible to directly connect the elemental optical fiber of the multi core optical fiber with the single core optical fiber since the distance between the adjacent core centers of the former is smaller than that of the latter.

Hitherto, the single core optical fiber is connected with one of the elemental optical fibers of the multi core optical fiber by heating and drawing the end 10 of the single core optical fiber 11 to be connected to decrease its diameter to the same size as that of the elemental optical fiber (see Fig. 2A), bundling several single core optical fibers (see Fig. 2B) and then fusing and connecting the bundled fibers with the multi core optical fiber.

In this connecting method, since the claddings of the single core optical fibers are not fused together, it is difficult to correctly arrange the drawn optical fibers in a desired configuration, and the bundled portions of the claddings contact each other and tend to be damaged on their surfaces which may deteriorate strength of the optical fibers.

One object of the invention is to provide a branch off device with which a multi core optical fiber comprising elemental optical fibers each having a smaller diameter and a cladding diameter than those of a single optical fiber is easily branched off to connect its elemental optical fibers with a plurality of the single core optical fibers with less insertion loss.

0137501

Another object of the invention is to provide a process for producing such the branch off device.

BRIEF DESCRIPTION OF THE DRAWINGS

Figs. 1A and 1B are each crosssectional view of a multi core optical fiber having a different configuration of the cores,

Fig. 2A is an elevation view of a single optical fiber one end of which is drawn,

Fig. 2B is an elevation view of a conventional branch off device comprising a bundle of drawn single core optical fibers,

Fig. 3 is an elevation view of a branch off device of the invention and shows how to connect it with a multi core optical fiber and a plurality of single core optical fibers,

Fig. 4 schematically shows the production of a branch off device of the invention,

Fig. 4A is a cross sectional view of a preform from which the branch off device of the invention is produced,

Fig. 5 is an elevation view of a drawn preform, and

Fig. 6 shows a relationship between drawing rate change in the production of the branch off device and resulting outer size change of the drawn preform.

According to one aspect of the invention, there is provided a device for branching off a multi core optical

0137501

fiber and connecting each elemental optical fiber thereof with a corresponding single core optical fiber, which device comprises a plurality of cores surrounded by a cladding material, in which, at one end of the device, each core has substantially the same diameter as that of the elemental optical fiber to be connected and spatial configuration of the cores are substantially the same as that of the elemental optical fibers, at the other end of the device, each core has substantially the same diameter as that of the single optical fiber to be connected and the core center distance is the same as or slightly larger than the cladding diameter of the single optical fiber, and all the the cladding materials surrounding the cores of the device are integrated together.

According to another aspect of the invention, there is provided a process for producing the branch off device of the invention, which comprises drawing a preform comprising cores having substantially the same ratio of a core distance between the adjacent cores to the core diameter as that in a multi core optical fiber to be connected therewith and substantially the same spatial configuration as those of the multi core optical fiber in such a way that the outer diameter of the preform periodically changes so that, at a portion of the drawn preform having the smallest size, each core has substantially the same diameter as that of an elemental optical fiber of the multi core optical fiber to be connected and spatial configuration of the cores are substantially the same as that of the elemental optical fibers and, at a portion of the drawn preform having the largest size, each core has substantially the same diameter as that of a single optical fiber to be connected and the core distance is the same as or slightly larger than the cladding diameter of the single optical fibers, and cutting the drawn preform at or near the portions having the smallest and largest sizes.

Now, the present invention will be illustrated by making reference to the attached drawings.

Fig. 3 shows how to branch off the multi core optical fiber 5 and to connect each elemental optical fibers with a plurality of single core optical fibers 6 by making use of a tapered branch off device 7 of the invention. The branch off device 7 is positioned between the multi core optical fiber 5 and a plurality of the single core optical fibers 6, and thereby, each elemental optical fiber of the multi core optical fiber is branched off and connected with the corresponding single core optical fiber 6. The claddings 9 surrounding the cores 8 of the multi core optical fiber are fused and integrated together. The length of the tapered portion of the device varies with tolerance limit of tapering of the core 8 and maximum insertion loss of the device, and is preferably from about 2 to 70 cm, more preferably from 3 to 20 cm. Since the cladding materials of the device are integrated, it is not necessary to bundle the single core optical fibers to be connected. Thus, they are

0137501

not damaged and the whole system has improved strength.  The core of the branch off device and the elemental optical fiber of the multi core optical fiber or the single optical fiber may be connected by a per se conventional method such as fusion bonding, butt welding or with a connector.  Among them, the fusion bonding is most preferred.

Although the branch off device of the invention is used to branch off the flat type multi core optical fiber in the above description, it may be used to branch off a different type of the multi core optical fiber when it is formed so that the configuration of its cores corresponds to that of the elemental optical fiber.

In the production of the branch off device of the invention, a preform comprising cores having substantially the same ratio of the core distance between the adjacent cores to the core diameter as that in the multi core optical fiber to be connected therewith and substantially the same spatial configuration as those of the multi core optical fiber is drawn in such a way that the outer size of the preform periodically changes.  At a portion of the drawn preform having the smallest size, each core has substantially the same diameter and distance as those of an elemental optical fiber of the multi core optical fiber to be connected and spatial configuration of the cores are substantially the same as that of the elemental optical fibers, and at a portion of the drawn preform having the largest size, each core has substantially the same diameter as that of a single optical fiber to be connected and the core distance is the same as or slightly larger than the cladding diameter of the single optical fibers. Thereafter, the drawn preform is cut at or near the portions having the smallest and largest sizes to obtain the branch off device of the invention.

The periodical change in the size of the preform may be caused by changing a drawing or supplying rate of the preform or a drawing temperature. Among them, change of the drawing rate is most preferred since it has quickest response.

By making reference to the attached drawings, the production of the branch off device of the invention will be explained.

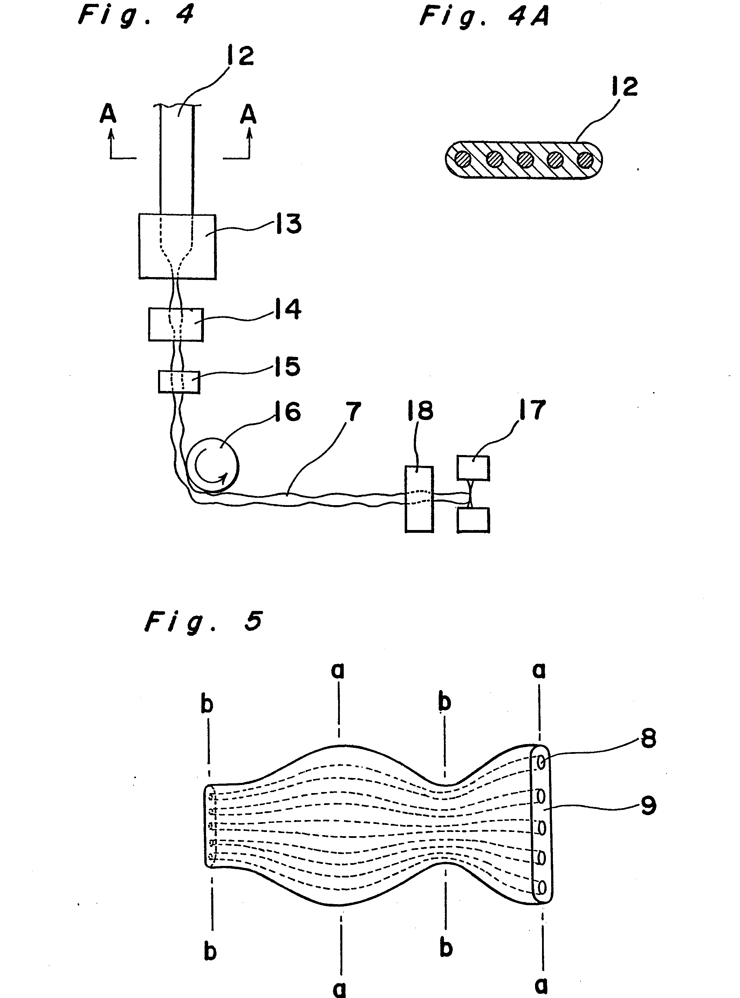

In Fig. 4, a preform 12 comprising cores having the same spatial configuration as that of the multi core optical fiber is heated in a drawing furnace 13 and drawn downwardly by a capstan 16. The size of the drawn preform 7 is measured by a measuring device 14, and then coated with plastic by a coating device 15. The drawn preform is pulled by the capstan 16, its size is again measured by a second measuring device 18 and then cut by a cutter 17. The value measured by the device 14 is fed back to the capstan 16 to adjust its rotating rate, namely the drawing rate of the preform so as to change the size periodically as designed. The size of the drawn preform is again measured by the second measuring device 18 and the measured value is fed to the cutter 17 to cut the preform at or near the portions having the smallest and largest sizes to produce the branch off device of the invention.

The drawn preform comprises a plurality of cores 8 and has the largest size at the portions (a) and the smallest size at the portions (b) as shown in Fig. 5. The cores 8 are surrounded by the claddings 9 and the adjacent parts of the claddings are fused and integrated together. The preform is cut at the portions (a) and (b) to produce the branch off devices of the invention. The preform may be cut by damaging its surface with a knife, high power laser, etc. and bending it to apply tensile stress on it or by melt cutting it with high power laser.

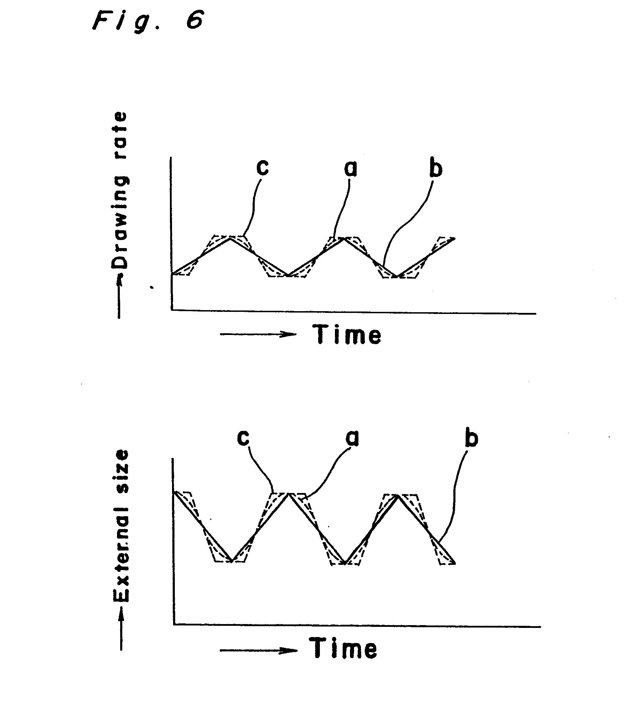

As the drawing rate is changed in the form of a sine wave (a), a triangular wave (b) or a trapezoid wave (c) as shown in the upper figure in Fig. 6, the external size of the drawn preform changes as shown in the lower figure in Fig. 6. Among them, the sine wave is most preferred in view of accuracy of the size and the insertion loss.

Example

According to the invention, a branch off device having a shape shown in Fig 3 was produced. At the smaller end of the device, each core had a diameter of 28 micrometers and a distance between the adjacent core centers of 70 micrometers and, at the larger end, the core had a diameter of 50 micrometers and a distance between the adjacent core center of 125 micrometers. The length of the device was 10 cm. With the smaller end of the device, was connected a flat type five core optical fiber each elemental optical fiber of which had a core diameter of 28 micrometers and a cladding diameter of 70 micrometers, and with the larger end, were connected five single core optical fibers each having a diameter of 50 micrometers and a cladding diameter of 125 micrometers by fusion bonding.

The insertion loss of the branch off device was measured. At the connection between the device and the multi core optical fiber, it was about 0.5 dB and at the connection between the device and the single optical fiber, nearly zero dB.

Claims:

1. A device (7) for branching off a multi core optical fiber (5) and connecting each elemental optical fiber thereof with a corresponding single core optical fiber (6), which device (7) is characterised by a plurality of cores (8) surrounded by a cladding material (9), in which, at one end of the device, each core (8) has substantially the same diameter as that of the elemental optical fiber to be connected and spatial configuration of the cores are substantially the same as that of the elemental optical fibers, at the other end of the device, each core (8) has substantially the same diameter as that of the single optical fiber (6) to be connected and the core center distance is the same as or slightly larger than the cladding diameter of the single optical fiber (6), and all the cladding materials (9) surrounding the cores of the device are integrated together.

2. A device according to claim 1 characterised by being used to branch off a flat type multi core optical fiber.

3. A process for producing a branch off device characerised by drawing a preform (12) comprising cores having substantially the same ratio of a core distance between the adjacent cores to the core diameter as that in a multi core optical fiber to be connected therewith and substantially the same spatial configuration as those of the multi core optical fiber in such a way that the outer diameter of the preform periodically changes so that, at a portion of the drawn preform having the smallest diameter (b), each core has substantially the same diameter as that of an elemental optical fiber of the multi core optical fiber to be connected and spatial configuration of the cores are substantially the same as that

0137501

of the elemental optical fibers and, at a portion of the drawn preform having the largest diameter (a), each core has substantially the same diameter as that of a single optical fiber to be connected and the core distance is the same as or slightly larger than the cladding diameter of the single optical fibers, and cutting the drawn preform at or near the portions having the smallest and largest sizes.

4. A process according to claim 3 characterised in that the preform is drawn in the form of a sine wave.

0137501

Fig. 1A

Fig. 1B

Fig. 2A

Fig. 2B

Fig. 3

0137501

*Fig. 4*

*Fig. 4A*

*Fig. 5*

Fig. 6